# EUROPEAN PATENT APPLICATION

(11) **EP 1 541 305 A1**
(43) Date of publication of application: **15.06.2005**
(21) Application number: 04029254.2
(22) Date of filing: 09.12.2004
(51) Int. Cl.: B27B 5/29, B23D 45/04

(54) **Ergonomic miter saw handle**

(30) Priority: 09.12.2003 US 731612
(71) Applicant: TechTronic Industries Co., Ltd., Tsuen Wan, New Territories, Hong Kong (CN)
(72) Inventor: Brazell, Kenneth M., Piedmont SC 29673 (US); Wacker, Charles M., Chandler AZ 85226 (US); Dils, Jeffrey M., Simpsonville SC 29681 (US); Long, Charles Keith, Seneca SC 29672 (US)
(74) Representative: HOFFMANN - EITLE

(57) **Abstract**

An ergonomic miter saw (10) is provided having a base (12) and a saw arm assembly (16) with the saw arm assembly pivotally affixed at a fixed end (18) to the base (12) and provided with a distal end having a handle (20) extending outwardly therefrom. The central region (24) of the arm assembly (16) includes a rotary spindle (26) supporting a cutting disk (28). A handle (20) is preferably provided with an elongate grip portion (42) sized for the user's fingers and a palm pad portion (44) extending outwardly therefrom to underlie the heal of the user's hand to minimize bending torque on the user's wrist as the arm (16) is lowered. Ideally, the handle (20,66) is rotated in a direction opposite that the cutting disk (28) is tilted. Preferably, the handle (20,66) is adjustably oriented about the arm axis (70) in a direction opposite that the saw blade (28) is tiltable so that the deviation for horizontal of the handle (20,66) can be minimized when the miter saw (10) is used in a tilted cutting disk mode.

## Description

### CROSS-REFERENCE TO RELATED APPLICATIONS

This application is a continuation-in-part of U.S. application Serial No. 09/771,775 filed January 21, 2001 which issues on December 9, 2003, as U.S. Patent 6,658,976.

### BACKGROUND OF THE INVENTION

### 1. Field of the Invention

The present invention relates to miter saws and particularly to ergonomic handles designed therefor.

### 2. Background Art

Motorized miter saws having a circular saw blade are generally constructed of three basic designs; a simple chop saw design where the saw blade is mounted on an arm which is pivoted to plunge into the work piece. A second design can be found where the orientation of the arm can be inclined relative to the saw fence to provide simple miter cuts throughout a range of cutting angles. Miter saws are additionally constructed of the compound miter saw design in which the arm that plunges into and out of the workpiece is adjustable about a generally vertical miter axis as well as a horizontal bevel or tilt axis to enable a user to cut the compound miter. The third common type of miter saw is a sliding compound miter saw which is similar to a compound miter saw, however, the arm assembly is free to move horizontally along a slide to enable wider boards to be cut for a given blade diameter, than can be cut by a conventional miter saw.

Miter saws all typically have a handle at the distal end of the arm for the user to grasp as the blade is plunged into the workpiece. In the case of a sliding compound miter saw the handle also enables the user to horizontally translate the saw blade relative to the workpiece. Handles have been made of a variety of different shapes. The three common shapes are a vertically oriented, a pistol grip handle, a horizontal D-handle, or a simple elongate straight or slightly curved outwardly extending handle sometimes referred to as a "banana" handle. The "banana" handles are commonly used in simple miter saws such as chop saws, while pistol grip or D-shaped handles of the vertical or horizontal design, are more frequently used in compound miter saws and sliding compound miter saws.

Due to the high degree of adjustability of a sliding compound miter saw, coupled with the high degree of handle movement, the handle is frequently difficult or awkward to grasp during all or portions of the plunge cutting motion, particularly at extreme tilt angles. Additionally, especially when making repeated plunge cuts during a large construction project, a user's wrist will tire. The object of the present invention is to provide a miter saw having a handle which is ergonomically designed to minimize user fatigue by comfortably orienting the handle relative to the operator, even during extremely inclined cuts, and by minimizing torque on the user's wrist.

### SUMMARY OF THE INVENTION

Accordingly, the miter saw of the present invention is provided having a base and arm assembly having a fixed arm and pivotally attached to the base, a free distal end forming a handle spaced outwardly therefrom to be grasped by a user and a central region provided with a rotary spindle supporting a cutting disk. The handle in the preferred embodiment is provided with a transversely elongated grip portion sized to be grasped by a user's fingers which wrap thereabout and a palm pad portion extending outwardly toward the user from the grip portion for a sufficient distance to underlie the heel portion of the user's palm. As the user grasps the handle and lowers the cutting disk into the workpiece, the palm pad portion transmits a downward force from the user's hand to the handle thereby minimizing the torque exerted on the user's wrist.

A preferred handle design has the handle oriented relative to an arm axis so that the handle is generally horizontal when the arm is viewed in a lower position. The arm further preferably includes a rotatable joint enabling the orientation of the handle to be varied about the arm axis and fixed at a comfortable position selected by the user for a particular compound miter cut. Most preferably, the miter saw of the present invention will include both the palm pad and the rotatable joint features, however, miter saws of the present invention could be fabricated only using one of the palm pad or rotatable joint features.

### BRIEF DESCRIPTION OF THE DRAWINGS

FIGURE 1 is a perspective view of the miter saw of the present invention;
FIGURE 2 is a partial top plan view illustrating the orientation of a user's hand relative to the miter saw handle in Figure 1;
FIGURE 3 is a side elevational view showing the orientation of the user's hand taken along line 3-3 of Figure 2;
FIGURE 4 is a right side elevational schematic view illustrating the orientation of a user's hand and arm relative to the miter saw during a plunge cut;
FIGURE 5 is a perspective view of an alternative miter saw embodiment;
FIGURE 6 is a front side elevational view of the miter saw of Figure 5;
FIGURE 7 is an exploded perspective view of an alternative adjustable handle embodiment;
FIGURE 8 is a cross-sectional view of an alternative lock bolt design;
FIGURE 9 is a perspective view of a second alternative adjustable handle embodiment;
FIGURE 10 is a perspective view of the lower portion of the second alternative adjustable handle embodiment of Figure 9; and
FIGURE 11 is a view of the underside of the second alternative adjustable handle embodiment of Figure 9.

### DETAILED DESCRIPTION OF THE PREFERRED EMBODIMENT(S)

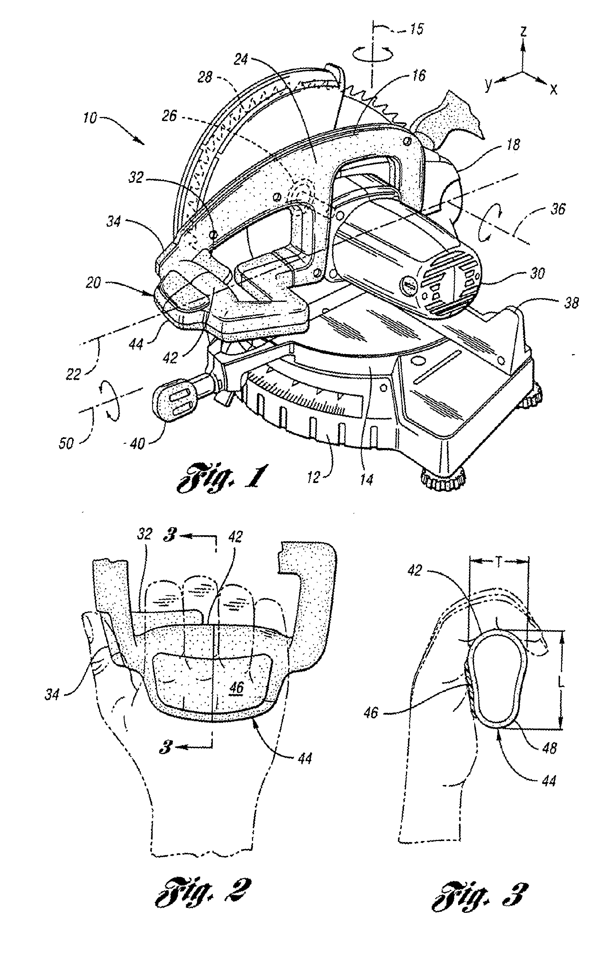

Miter saw 10 illustrated in Figure 1, discloses a preferred embodiment of the present invention. Miter saw 10 is made up of a base 12 having a rotary table 14 mounted thereon, pivotal about a generally vertical Z axis 15. An arm assembly 16 is provided with a fixed end 18 pivotally attached to the rotary table portion 14 of base 12. Arm assembly 16 is further provided with a handle 20 formed at the free distal end of the arm assembly 16 opposite fixed end 18. The arm assembly 16 extends along an arm axis 22 and has an arm central region 24 located between fixed end 18 and handle 20. Arm central region 24 is provided with a rotary spindle 26 which carries a rotary cutting disk 28. Rotary cutting disk is typically a circular saw blade or alternatively it can be an abrasive wheel. Rotary spindle 26 is operatively driven by an electric motor 30 via a conventional gear reduction mechanism not shown.

In Figure 1, arm assembly 16 is shown in the lowered position. Arm assembly 16 will be typically biased to the raised upper position by a spring so that rotary cutting disk 28 will be spaced above the upper surface of rotary table 14. When it is desired to be cut, the user will grasp handle 20 and turn on the saw by simultaneously depressing trigger 32 and interlock 34 with the user's finger and thumb, respectively, to cause the motor to rotate the cutting disk 28. When the cutting disk 28 is rotating at full speed, the user pivots arm 16 to a lower position. As the fixed end of arm 18 pivots about arm pivot axis 36, which is parallel to the axis of rotary spindle 26 cutting disk 28 severs the workpiece. Base 12 is further provided with a fence 38 which jointly with the upper surface of base 12 and rotary table portion 14, supports a wooden board or the like during the cutting operation. In Figure 1, rotary table portion 14 is oriented so that the plane of blade 28 is perpendicular to fence 38 for making a 90° cut. When it is desired to make a conventional miter cut, rotary table 14 is turned by releasing and re-locking table lock 40 to incline the plane of a cutting disk 28 relative to fence 38. A similar tilt lock mechanizing enables the user to vary the title angle for making a bevel cut or a compound cut.

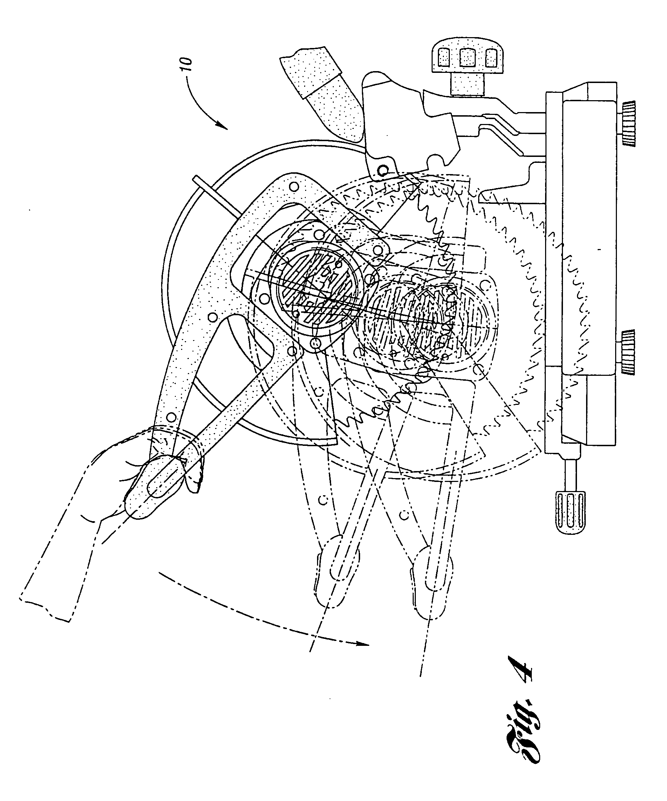

Handle 20 is shown in an enlarged plan view in Figure 2 with the user's right hand in phantom outline grasping the handle. Trigger 32 and interlock 34 are oriented relative to handle 20 to be proximate the user's index finger and thumb. Handle 20, which can be seen in Figure 2 and the cross-sectional side view of Figure 3, is made up of an elongate grip portion 42 and a palm pad portion 44. The elongate grip portion 42 is sized to enable a user's fingers to wrap thereabout. The palm pad portion 44 extends outwardly toward the user in a sufficient distance to underlie the heel portion of the user's palm as illustrated in Figure 3. This design minimizes torque on the user's wrist as a user pushes downwardly on handle 20 to lower the arm assembly 16.

Preferably palm pad portion 44 is provided with a soft palm pad member 46 supported on the structural palm pad member 48 to further facilitate user comfort during extended periods of use. Ideally, the elongate grip portion 42 will have a maximum vertical thickness T illustrated in Figure 3 which is between 1.5" and 2.5". Further, the handle will have a length L measured along the arm axis of between 3" and 4.5". This length provides sufficient support for the heel of the user's palm during the cutting motion to minimize the bending torque exerted on the user's wrist.

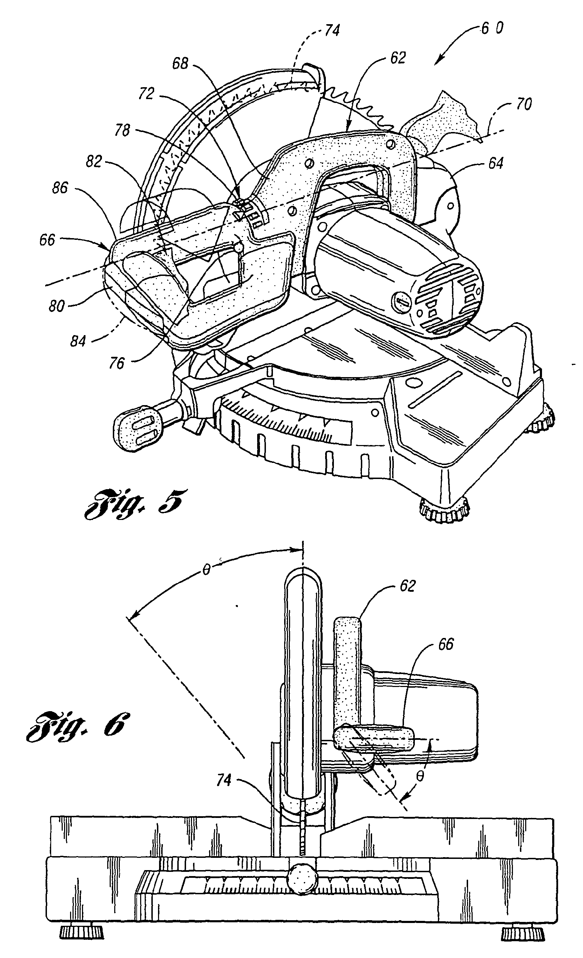

An illustration of the orientation of the user's hand relative to handle 20 and arm assembly 16 of miter saw 10 is shown in Figure 4. Handle 20 is generally oval or egg shaped in cross-sectional view as illustrated in Figure 3. The handle should have a transverse length measured in the X axis when the cutting disk 28 is square to table 14 which is wide enough to accommodate a user's hand. In the embodiment illustrated, handle 20 is generally U-shaped in plan view, however, a pistol grip design supported only on one side of the elongate grip portion 42 can alternatively function. Preferably, palm pad portion 44 is no wider than the user's hand. The palm pad portion should not ideally extend to the left toward interlock 34 beyond the user's palm so as to not interfere with the motion of the user's thumb when depressing the interlock and trigger buttons.

In miter saw 10 embodiment, elongate grip portion 42 is generally parallel to spindle 26. In that way, when the cutting disk 28 is oriented perpendicular to table 14, elongate grip portion 42 is horizontal. Alternatively, elongate grip portion could be rotated clockwise slightly when looking at the handle along arm axis 22 from the handle end. Rotating the elongate handle portion 20° to 30° clockwise does not adversely affect performance when the cutting disk 28 is perpendicular to table 14 and can significantly improve user comfort as in the case of a compound miter saw, when the plane of cutter cutting disk 28 is tilted counter-clockwise about a Y axis 50. It should be noted when arm assembly 16 and cutting disk 28 is tilted about the Y axis 50, arm pivot axis 36 likewise rotates and becomes inclined from horizontal. Since compound miter saws are typically capable of moving up to 45° to the left, i.e. counter-clockwise about the Z axis when viewed from the front rotating the handle, 20° to 30° is a good compromise for a fixed handle location to provide comfort when making square cuts as well as bevel cuts throughout the range of band motion which is typically 45 ° counter-clockwise.

An alternative embodiment of the present invention is illustrated in miter saw 60 shown in Figure 5. Miter saw 60 differs from miter saw 10 only in the construction of arm assembly 62. Arm assembly 62 is made up of a fixed end 64, a handle 66 at the opposite end of the arm assembly 62 and a central region 68, extending therebetween along arm axis 70. Arm assembly 62 includes a rotatable joint 72 which enables handle 66 to be rotated generally about handle axis 70 so the orientation of the handle can be varied relative to cutting disk (blade or abrasive wheel) 74. Preferably, handle 66 is free to rotate at the rotatable joint through a range of motion comparable to the range of tilt of the cutting disk relative to the base. For a miter saw capable of tilting to the left counter-clockwise, handle 66 should be capable of rotating clockwise so that the deviation of the handle from horizontal can be minimized. A one to one correspondence of the range of handle motion and the range of blade tilt is convenient but not necessary. A slight handle inclination from horizontal and extreme blade tilt angle is acceptable. Ideally, the handle is capable of moving between 0° and 30° clockwise, if the miter saw tilts counter-clockwise 45°. More preferably, in instances when the miter saw is capable of tilting both clockwise and counter-clockwise, the miter saw handle 66 is capable of up to 40° rotation in the direction opposite that of blade tilting.

In order to facilitate rotation of handle 66, a detent button 76 is provided which when depressed by the user to enable the handle to be rotated. When the detent button 76 is released, a conventional spring bias mechanism locks the handle in position. A scale 78 and pointer is likewise provided on the rotatable joint 72 to provide a visual indication as to the amount of handle rotation about axis 70.

It should be noted that the rotatable handle feature shown in miter saw 60 can be used in conjunction with a palm pad described previously in reference to miter saw 10 or in a conventional pistol grip or D-handle type miter saw handle not having a palm pad. As illustrated in Figure 5, the palm pad is not utilized, rather, interlock 80 is provided on the outer surface of handle 66 while a trigger 82 is provided on the inboard surface. Alternatively, a palm pad 84 shown in phantom outline in Figure 5 can be provided, in which case interlock 86 would be located the left side of handle 66 in order to be grasped by the user's right thumb.

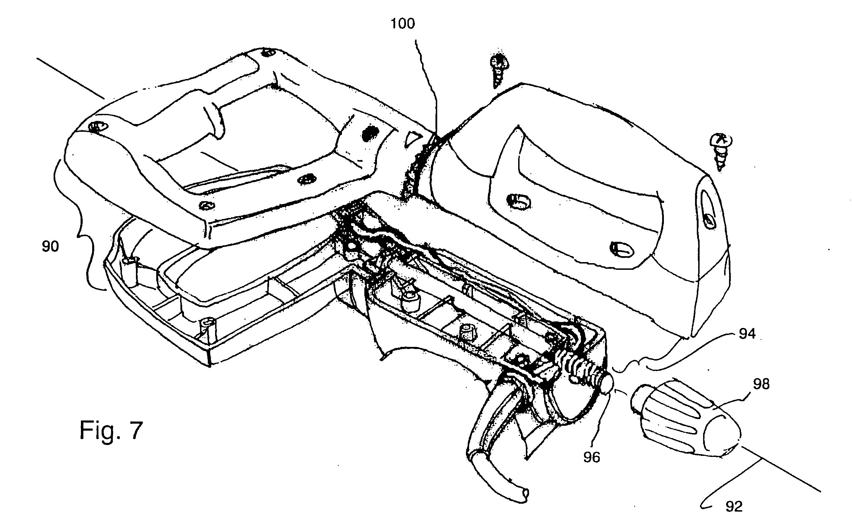

An alternative rotatable handle assembly 90 is illustrated in Figure 7. Handle assembly 90 is pivotal about axis 92 relative to arm assembly 94 through a limited range of travel. The orientation of handle assembly 90 may be set by the user at a desired location for a particular cut and releasably locked in a place using an axially aligned lock bolt 96 and knob handle 98 rather than a spring biased detent used in the Figure 5 embodiment.

In order to lock the handle assembly 90 in place with minimal axial clamping force it is preferable to provide matching radial grooves or ratchet teeth 100 on the mating surfaces of handle assembly 90 and arm assembly 94 as shown.

Knob handle 98 is shown in Figure 7 on the rear of the arm assembly 90, however, it could alternatively be located on the front of the handle 90. Knob handle 98 is shown in a simple one piece design, however, a cam lock or quick release type handle mechanism could alternatively be used as illustrated in U.S. Patents 6,241,322 (Phillips) and 3,807,761(Brilando) which are incorporated by reference herein.

In order to maintain some minimal clamping force between handle assembly 90 and arm assembly 94, lock bolt 96' is designed to receive a coil spring 102 and a snap ring 104 thereabout. The coil spring is axially compressed and abuts a portion of the arm assembly 94 and the snap ring 104 connected to bolt 96' exerting an axial clamping force on the arm assembly 94 and handle assembly 90. When the user loosens knob handle 98, ratchet teeth 100 serve as detents holding the handle in place until the user rotates the handle assembly 90 to a desired position overcoming the axial biasing force of coil spring 102. Once the handle is in the desired position, the user can then tighten knob handle 98 without the handle assembly moving or becoming misaligned during tightening.

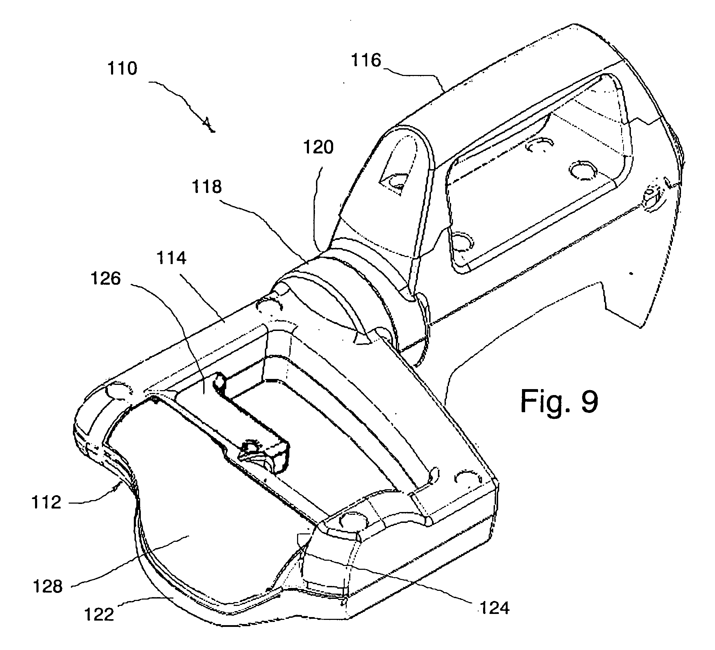

A second alternative embodiment of the rotatable handle assembly 110 is illustrated in Figure 9. Alternative rotatable handle assembly 110 is very similar to rotatable handle assembly 90 shown in Figure 7. Improvements lie in the geometry of the handle 112 and the construction of the cooperating ratchet teeth between the handle assembly 114 and the arm assembly 116. The ratchet teeth which are not visible in Figure 9 are formed on boss 118 on handle assembly 114 and boss 120 on arm assembly 116.

Handle 112 has a longitudinal length sufficient to accept to user's hand wrapped thereabout in pistol grip fashion. Handle 112 is provided with an enlarged palm pad portion 122 as illustrated in Figure 9 which extends outward to underlie the palm of the user's hand. Handle 112 is further provided with a lower abutment 124 which extends orthogonally from the handle outward to abut the fleshy edge portion of the user's hand below the user's little finger when the user's right hand grips the handle illustrated in Figure 9. A trigger 126 is oriented on the opposite inside portion of the handle 112 to be actuated by the user's index finger or the index and adjacent finger. The upper surface of palm pad 122 is provided with an elastomeric cover 128 to provide a soft rubber like gripping surface.

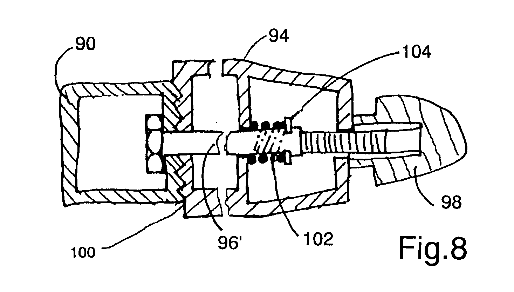

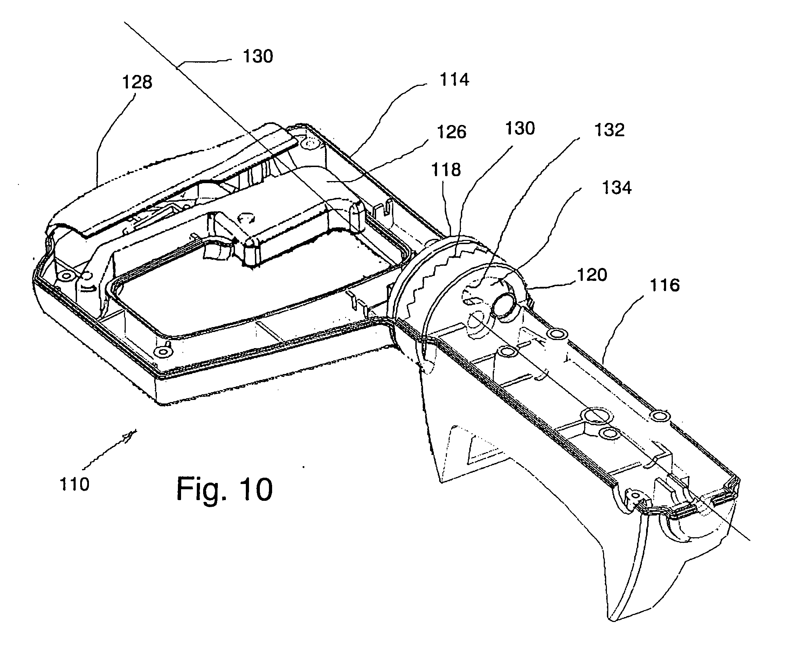

In Figure 10, the rotatable handle assembly 110 is shown with the upper portion of the handle assembly 114 and arm assembly 116 removed. Cooperating ratchet teeth 130 are shown on handle assembly boss 118 and arm assembly boss 120. An arcuate groove 132 is formed through the arm assembly boss 122 as shown. The electrical wires connecting the switch assembly 126 to the saw motor pass through arcuate groove 132. In order to prevent the wires from being pinched, a tubular sleeve 134 is provided which acts as a travel stop for the rotation of handle assembly 114 relative to arm assembly 116, as the handle is rotated about ratchet teeth 130. Of course, a bolt and a locking handle will be provided as described previously with reference to Figures 7 and 8.

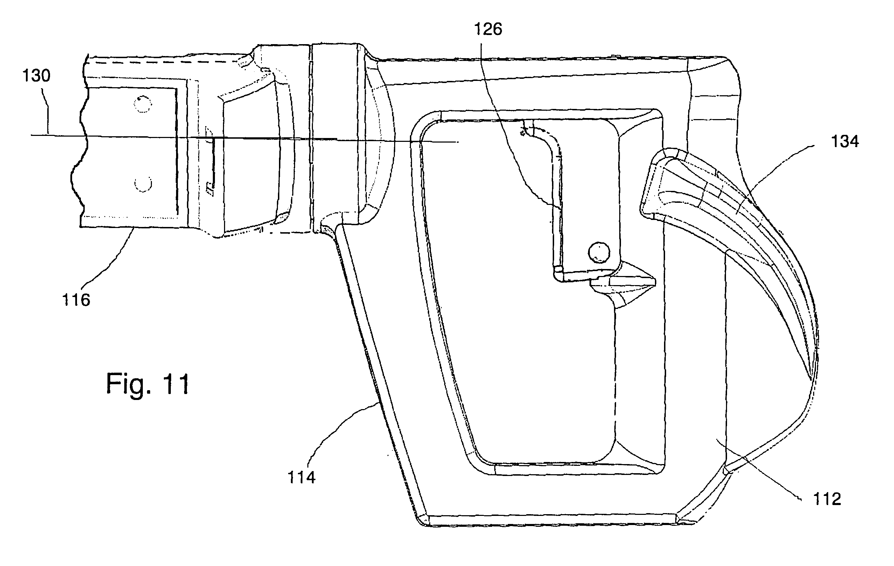

To further provide comfort and control for the user, as the handle 112 is gripped by the user's hand, the underside of handle 112 is provided with a thumb support 134 (illustrated in Figure 11). Thumb support 134 extends generally helically about handle 112 following the natural contour of the user's thumb as the user grips handle 112.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. A miter saw comprising:
a base;
an arm assembly having a fixed end pivotally attached to the base, a free distal end forming a handle spaced outwardly therefrom and a central region therebetween provided with a rotary spindle supporting a cutting disc;
wherein the handle has a transverse oriented elongate grip portion sized for a user's fingers to wrap thereabout and a palm pad portion extending outwardly from the grip portion for a distance sufficient to underlie the heel portion of the palm of the user's hand so that as the user lowers the handle towards the base to cause the cutting disc to engage a work piece, the palm pad portion transmits downward force from the user's hand to the handle thereby minimizing torque on the user's wrist.

2. The miter saw of claim 1 wherein the elongate grip portion further comprises a lock-out switch extending transversely to the left of the grip portion adjacent the user's thumb and a trigger switch mounted on the grip portion extending inwardly from the grip portion adjacent a user's index finger.

3. The miter saw of claim 1 wherein the palm pad portion further comprises a soft elastomeric pad overlying a relatively rigid structural pad member.

4. The miter saw of claim 1 wherein the arm extends along an arm axis which is generally perpendicular to the rotary spindle when the arm is viewed in plan view in a lowered position.

5. The miter saw of claim 4 wherein the arm includes a rotatable joint enabling the orientation of the handle to be varied about the arm axis and fixed at a position selected by a user.

6. The miter saw of claim 5 wherein the rotatable joint has sufficient travel to enable the elongate grip portion to be moved between a horizontal position and a position rotated at least 30° counter-clockwise about the arm axis therefrom measured when the arm is lowered and the rotary spindle is generally horizontal.

7. The miter saw of claim 4 wherein the handle has a fore and aft length measured along the arm axis of between 3" and 4.5".

8. The miter saw of claim 7 wherein the handle has a maximum vertical thickness where the handle is in a lowered horizontal orientation of between 1.5" and 2.5".

9. The miter saw of claim 8 wherein the elongate grip portion further comprises a lock-out switch extending transversely to the left of the grip portion adjacent the user's thumb and a trigger switch mounted on the grip portion extending inwardly from the grip portion adjacent a user's index finger.

10. A miter saw comprising:
a base; and
an arm assembly having a fixed end pivotally attached to the base, a free distal end forming a handle spaced outwardly therefrom and a central region therebetween provided with a rotary spindle supporting a cutting disc, said handle including a grip portion, connected to said arm central region via a rotatable joint to permit rotation of said handle about a common pivot axis; said rotatable joint having a locking mechanism cooperating with the arm central region for permitting selective handle rotation about said pivot axis and for maintaining a selected orientation of said handle portion relative to said central region during a cutting operation of the miter saw.

11. The miter saw of claim 10 wherein the handle is rotatably adjustable between at least 0° and 30° from horizontal measured when the arm is lowered and the rotary spindle is horizontal.

12. The miter saw of claim 10 wherein the locking mechanism comprises an elongate bolt spanning the rotatable joint between the handle and the arm, and a user engagable locking handle cooperating with the bolt to axially clamp the handle and arm together at a user selected orientation.

13. A miter saw comprising:
a base; and
an arm assembly having a fixed end pivotally attached to the base, a free distal end forming a handle spaced outwardly therefrom, a central region therebetween provided with a rotary spindle supporting a cutting disc; said handle being connected to said central region via a rotatable joint to permit the rotation of said handle, about a longitudinal axis therethrough;
wherein the locking mechanism comprises an elongate bolt spanning the rotatable joint between the handle and the arm, and a user engagable locking handle cooperating with the bolt to axially clamp the handle and arm together at a user selected orientation.

14. The miter saw of claim 13 wherein said rotatable joint comprising indicia and a corresponding alignment configuration to provide a visual indication to the amount of handle rotation of said second handle portion about said central longitudinal axis.

15. The miter saw of claim 13 wherein the handle is provided with palm pad portion having comprises a soft elastomeric pad overlying a relatively rigid structural member.

16. The miter saw of claim 13 wherein the handle has a maximum vertical thickness when the handle is in a lowered horizontal orientation of between 1.5" and 2.5".

17. The miter saw of claim 13 wherein the handle has a fore and aft length measured along the arm axis of between 3" and 4.5".

18. The miter saw of claim 17 wherein the handle has a maximum vertical thickness where the handle is in a lowered horizontal orientation of between 1.5" and 2.5".

19. The miter saw of claim 10 wherein the pivotal attachment of the arm to the base is adjustable about a vertical and a horizontal axis in order to enable a user to make a compound miter cut.

20. The miter saw of claim 19 wherein the handle is rotatable to the same extent that the arm is adjustable about the horizontal axis so as to enable the handle to be maintained in a horizontal orientation during a compound miter cut.
